# EUROPEAN PATENT APPLICATION

(11) **EP 4 841 245 A1**
(43) Date of publication of application: **18.11.2026**
(21) Application number: 25739141.7
(22) Date of filing: 10.01.2025
(51) Int. Cl.: G01N 21/64, G06K 19/06

(54) **OPTICAL SYSTEM COMPRISING MULTIPLE LIGHT SOURCES**

(30) Priority: 10.01.2024 KR 20240004311
(71) Applicant: SD Biosensor Inc., Gyeonggi-do 16690 (KR)
(72) Inventor: LEE, Hyo-Keun, Suwon-si Gyeonggi-do 16690 (KR); PARK, Hyo-Lim, Suwon-si Gyeonggi-do 16690 (KR); JANG, Kwang-soo, Suwon-si Gyeonggi-do 16690 (KR); KIM, Min-Young, Suwon-si Gyeonggi-do 16690 (KR); CHA, Min-Ho, Suwon-si Gyeonggi-do 16690 (KR)
(74) Representative: Regimbeau
(86) International application number: PCT/KR2025/000636
(87) International publication number: WO 2025/150981

(57) **Abstract**

The present invention relates to a system capable of precise analysis without a driving unit for moving light sources, in a system requiring light irradiation from multiple light sources toward a single common focusing point.

## Description

### [Technical Field]

The present invention relates to an optical system including a plurality of light sources.

### [Background Art]

Information acquirable from an analysis target material is various. For example, when the analysis target material includes a genetic material, whether infection with a disease of interest is present may be determined by amplifying the genetic material using a primer and the like having a specific fluorescent material.

The process of determining whether a disease infection is present includes a process in which, when an analysis target material is irradiated with light of a specific wavelength range capable of exciting a fluorescent material, the light of the specific wavelength range is emitted from the excited fluorescent material, and the emitted light is analyzed.

When the analysis target material is irradiated several times with light of wavelength ranges capable of detecting different fluorescent materials, and light emitted due to the light irradiation is analyzed, whether a plurality of disease infections are present may also be determined. However, in order to irradiate a point at which the analysis target material is located with light several times, a process of moving light sources was required, and accordingly, there was a disadvantage that securing analysis data took a long time.

Accordingly, the inventors developed the present invention that is able to irradiate a receiving space in which an analysis target material is received with light of a plurality of wavelength ranges even without movement of light sources for irradiating with the light of the plurality of wavelength ranges, and is thus capable of rapid analysis.

(Patent Document 1) Korean Registered Patent Document No. 10-2416335 (2022.07.05.)
(Patent Document 2) Korean Patent Publication No. 10-2022-0102078 (2022.07.19.)

### [Disclosure]

### [Technical Problem]

According to the present invention, an object thereof is to provide a system capable of precise analysis even without movement of a light source for irradiating with light of a plurality of wavelength ranges in a system in which light irradiation from a plurality of light sources toward one common focusing point is required.

Further, an object thereof is to provide a system in which the accuracy of optical analysis is enhanced as wavelength ranges of light with which a common focusing point is irradiated do not overlap each other, and wavelength ranges of light emitted from the common focusing point likewise do not overlap each other.

In addition, an object thereof is to provide a system capable of elevating a light source to a corresponding point and irradiating a corresponding common focusing point with light of a plurality of wavelength ranges even when a plurality of common focusing points are present in a height direction.

### [Technical Solution]

One embodiment of the present invention for solving the above-described problems provides an optical module including a first light source, a second light source emitting light of a different wavelength range from the first light source, a first mirror spaced apart from the first light source by a first distance and configured to change a first optical path of light emitted from the first light source, a second mirror spaced apart from the second light source by a second distance different from the first distance and configured to change a second optical path of light emitted from the second light source, and a common mirror disposed on the optical paths changed by the first mirror and the second mirror, and configured to change the changed optical paths so that the changed optical paths are directed toward a common focusing point, wherein a distance between the first mirror and the common mirror and a distance between the second mirror and the common mirror are different from each other.

In one embodiment, the optical module may further include a first filter disposed between the first light source and the first mirror and filtering wavelengths in a range other than a first wavelength range, and a second filter disposed between the second light source and the second mirror and filtering wavelengths in a range other than a second wavelength range different from the first wavelength range.

In one embodiment, the first wavelength range and the second wavelength range may not overlap.

In one embodiment, the optical module may further include a sensor receiving light emitted from the common focusing point as light is radiated to the common focusing point by the common mirror, and a common filter disposed between the common mirror and the sensor and filtering wavelengths in a range other than a plurality of preset emission wavelength ranges.

In one embodiment, the plurality of emission wavelength ranges may be ranges not overlapping each other.

In one embodiment, the plurality of emission wavelength ranges may be ranges not overlapping each other and not overlapping the first wavelength range and the second wavelength range.

In one embodiment, the optical module may further include a third light source emitting light of a different wavelength range from the first light source and the second light source, a fourth light source emitting light of a different wavelength range from the first to third light sources, a third mirror spaced apart from the third light source by a third distance different from the first and second distances and configured to change a third optical path of light emitted from the third light source, and a fourth mirror spaced apart from the fourth light source by a fourth distance different from the first to third distances and configured to change a fourth optical path of light emitted from the fourth light source.

In one embodiment, the optical module may further include a third filter disposed between the third light source and the third mirror and filtering wavelengths in a range other than a third wavelength range different from the first and second wavelength ranges, and a fourth filter disposed between the fourth light source and the fourth mirror and filtering wavelengths in a range other than a fourth wavelength range different from the first to third wavelength ranges.

In one embodiment, the first light source and the second light source may emit light at installation positions.

In one embodiment, there may be no driving motor for moving the first light source and the second light source.

Further, the present invention provides an optical system including the optical module according to the above-described item and an amplification module in which a receiving space is located at the common focusing point, wherein a genetic material extracted from a sample and a fluorescent material excited by wavelength ranges emitted from the first light source and the second light source to emit light of a specific wavelength range are received in the receiving space.

In one embodiment, the optical system may further include an elevating module elevating the optical module, wherein the elevating module may include a motor, a rotating shaft having one end coupled to the motor, and an elevating part connecting the rotating shaft and the optical module such that the elevating part elevates to elevate the optical module when the rotating shaft rotates.

In one embodiment, the elevating module may further include an elevating rail guiding the elevation of the elevating part and an elevating sensor sensing the elevation of the elevating part.

Further, the present invention provides an analysis system including the above-described optical system, the analysis system further including a cartridge to which the amplification module is coupled, and a casing provided with an internal space into which the cartridge is insertable, wherein a barcode including information on a collection target of the sample is located on an outer surface of the cartridge, and a recognition module for recognizing the barcode is located on each of the outside and inside of the casing.

### [Advantageous Effects]

According to the present invention, in a system in which light irradiation from a plurality of light sources toward one common focusing point is required, precise analysis is possible even without movement of a light source for irradiating with light of a plurality of wavelength ranges.

In addition, as wavelength ranges of light with which a common focusing point is irradiated do not overlap each other and emission wavelength ranges in which light emitted from the common focusing point is received by a sensor likewise do not overlap each other, the accuracy of optical analysis is improved.

In addition, even when a plurality of common focusing points are present in a height direction, a light source can be elevated to a corresponding point and a corresponding common focusing point can be irradiated with light of a plurality of wavelength ranges.

### [Description of Drawings]

FIG. 1 is a schematic view for describing an optical module and an amplification module according to an embodiment of the present invention.
FIG. 2 is a cross-sectional view for describing the optical module and the amplification module in FIG. 1 more specifically.
FIG. 3 is a view for describing a state in which the optical module and an elevating module are coupled.
FIG. 4 is a side view of the elevating module in FIG. 3.

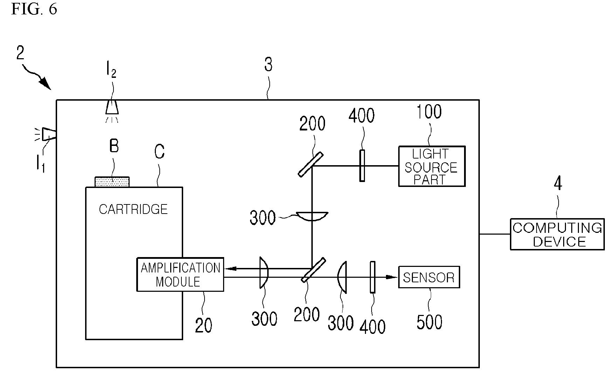

FIGS. 5 and 6 are views for describing a coupling relationship between the optical module and the amplification module in FIG. 1, and an analysis system.
FIG. 7 is a view for describing wavelength ranges described in the present invention.

### [Modes of the Invention]

In some cases, in order to prevent the concept of the present invention from becoming ambiguous, known structures and devices may be omitted, or may be illustrated in a block diagram form centered on core functions of each structure and device.

Throughout the specification, when a certain part "comprises" or "includes" a certain component, this means that other components may be further included rather than excluding other components unless specifically stated otherwise. Further, terms such as "... part," "... unit," and "module" described in the specification mean a unit that processes at least one function or operation, and this may be implemented by hardware or software, or a combination of hardware and software. In addition, "a," "an," "one," "the," and similar related words may be used with meanings including both singular and plural forms in the context of describing the present invention (particularly, in the context of the following claims), unless otherwise indicated herein or clearly contradicted by context.

In describing embodiments of the present invention, when it is determined that a detailed description of a known function or configuration may unnecessarily obscure the gist of the present invention, the detailed description will be omitted. Further, terms described below are terms defined in consideration of functions in embodiments of the present invention, and this may vary according to an intention or custom of a user, an operator, and the like. Accordingly, the terms should be defined based on the content throughout the present specification.

Hereinafter, the present invention will be described in detail with reference to the accompanying drawings.

An optical system 1 according to an embodiment of the present invention includes an optical module 10, an amplification module 20, and an elevating module 30.

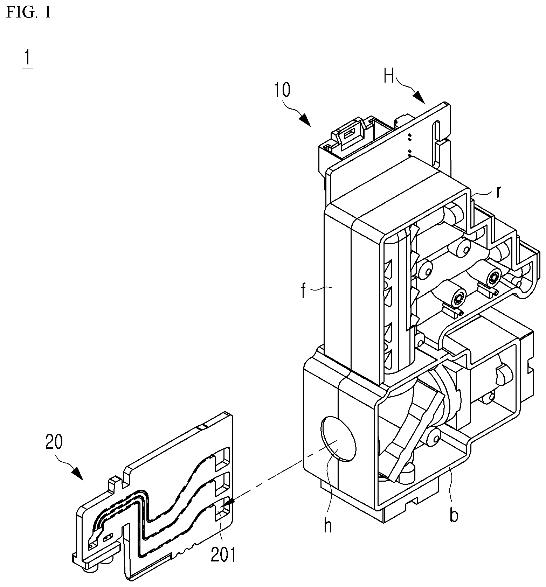

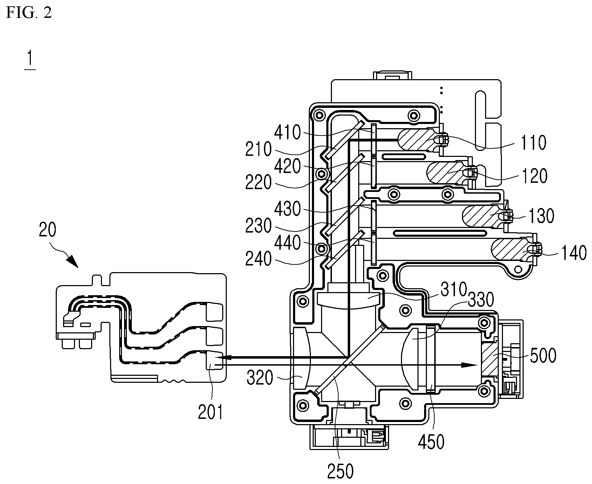

Referring to FIGS. 1 and 2, the optical module 10 according to the embodiment of the present invention includes a plurality of optical components provided inside a housing H.

The plurality of optical components include a light source part 100, a mirror part 200, a lens part 300, a filter part 400, and a sensor 500.

The light source part 100 includes a plurality of light sources 110, 120, 130, and 140, and each light source is configured to emit light of a different wavelength range. That is, a first light source 110 emits light of a first wavelength range, a second light source 120 emits light of a second wavelength range, a third light source 130 emits light of a third wavelength range, and a fourth light source 140 emits light of a fourth wavelength range. The first to fourth wavelength ranges may be wavelength ranges not overlapping each other. Further, the first wavelength range may be 685 nm to 695 nm, the second wavelength range may be 615 nm to 635 nm, the third wavelength range may be 540 nm to 550 nm, and the fourth wavelength range may be 465 nm to 475 nm, but they are not particularly limited thereto.

Meanwhile, it is preferable that the first to fourth wavelength ranges each correspond to an excitation wavelength range of one of a plurality of fluorescent materials located in a receiving space, and are not limited to the above-described numerical ranges. Meanwhile, the plurality of fluorescent materials located in the receiving space include FAM, HEX, CY5, and CY5.5, but are not limited thereto, and any fluorescent material required to perform optical analysis of a specific material included in a sample may be applied.

Meanwhile, as illustrated in FIG. 2, each light source is installed in the housing H while aligned vertically, and more specifically, is installed in the housing H while aligned vertically and diagonally. In other words, each light source is installed in the housing H while spaced apart from a front surface f of the housing H by a different distance. FIG. 2 illustrates a state in which the first light source 110 is installed closest to the front surface f, and the distance from the front surface f at which the light source is installed increases toward the fourth light source 140.

First to fourth filters 410, 420, 430, and 440 are installed on optical paths of each of the light sources. Each filter is configured to filter wavelength ranges other than the wavelength range emitted from the corresponding light source. In other words, in the case of a first filter 410 provided at a front end of the first light source 110, the first filter 410 filters wavelength ranges other than the first wavelength range and allows only light of the first wavelength range to pass therethrough to increase the accuracy of analysis.

First to fourth mirrors 210, 220, 230, and 240 are installed at front ends of the first to fourth filters 410, 420, 430, and 440. Paths of light emitted from the first to fourth light sources 110, 120, 130, and 140, passing through the first to fourth filters 410, 420, 430, and 440, and reaching the first to fourth mirrors 210, 220, 230, and 240 are changed by the first to fourth mirrors 210, 220, 230, and 240. Taking FIG. 2 as an example, the first to fourth mirrors 210, 220, 230, and 240 are obliquely installed to be inclined toward the first to fourth light sources 110, 120, 130, and 140 at front ends of the first to fourth filters 410, 420, 430, and 440, and accordingly, the optical paths may be changed. FIG. 2 illustrates a configuration in which the optical path may be changed by 90 degrees so that light directed toward the front surface f of the housing H is directed toward a bottom surface b.

The first to fourth mirrors 210, 220, 230, and 240 are configured to change only paths of light incident from specific directions. More specifically, the first to fourth mirrors 210, 220, 230, and 240 change paths of light incident from a rear surface r of the housing H in which the first to fourth light sources 110, 120, 130, and 140 are installed, but allow light incident from an upper surface of the housing H to pass therethrough without changing the paths of the light. Accordingly, light whose path has been changed by a mirror located on an upper side may be directed toward a common mirror 250 without the optical path being changed again by a mirror located on a lower side than the mirror.

The common mirror 250 is installed on the optical paths changed by the first to fourth mirrors 210, 220, 230, and 240. The common mirror 250 serves to change the optical paths again so that light whose paths have been changed by the first to fourth mirrors 210, 220, 230, and 240 is directed toward a receiving space 201 in which an analysis target material is received. Taking FIG. 2 as an example, the common mirror 250 is also installed obliquely in the housing H like the first to fourth mirrors 210, 220, 230, and 240, and accordingly, the optical paths may be changed. Taking FIG. 2 as an example, a configuration in which the optical paths may be changed by 90 degrees so that light directed toward the bottom surface b of the housing H by the first to fourth mirrors 210, 220, 230, and 240 is directed again toward the front surface f through the common mirror 250 is illustrated.

Light whose path has been changed by the common mirror 250 is emitted to the outside of the housing H through a hole h formed in the front surface f of the housing H. The amplification module 20 including the receiving space 201 is located at the front of the emission hole h, and an analysis target material is received in the receiving space 201. The analysis target material may be a genetic material, and more specifically, may be DNA or RNA, but is not particularly limited thereto as long as it is a material including genetic information. Further, it is preferable that the analysis target material received in the receiving space 201 have undergone an amplification process such as PCR or the like in advance.

The common mirror 250 is also configured to change only the path of light incident from a specific direction, like the first to fourth mirrors 210, 220, 230, and 240. More specifically, the common mirror 250 changes paths of light incident from the first to fourth mirrors 210, 220, 230, and 240, but allows light incident from the front surface f of the housing H to pass therethrough without changing the path of the light. Accordingly, as the fluorescent material is excited, light incident through the hole h is allowed to pass through the common mirror 250 without the path of the light being changed.

Meanwhile, the sums of distances from each light source to the first to fourth mirrors and distances from the first to fourth mirrors to the common mirror 250 may all be the same. In other words, an optical path length from the first light source 110 to the common mirror 250, an optical path length from the second light source 120 to the common mirror 250, an optical path length from the third light source 130 to the common mirror 250, and an optical path length from the fourth light source 140 to the common mirror 250 may all be the same. As the optical path lengths from each light source to the common mirror are provided to be the same, final focusing points of light emitted from light sources installed at different positions may be one common point (a common focusing point) in the receiving space 201, and accordingly, an advantage that constant data may be acquired even without a separate driving part for driving a light source is achieved.

The sensor 500 is disposed at a rear end of the common mirror 250, that is, at a portion disposed to face the hole h with the common mirror 250 therebetween. The sensor 500 receives light emitted from the fluorescent material of the receiving space 201, and information on the light received by the sensor 500 is transmitted to a computing device 4 in the form of data. The computing device 4 determines whether a target from which the analysis target material has been acquired is infected with a disease, whether a target material is present, and the like using the transmitted information on the light.

Meanwhile, a common filter 450 is disposed between the common mirror 250 and the sensor 500. The common filter 450 is configured to filter wavelengths of remaining ranges excluding a plurality of preset emission wavelength ranges. The plurality of preset emission wavelength ranges may be wavelength ranges different from the first to fourth wavelength ranges, and may be wavelength ranges not overlapping the first to fourth wavelength ranges.

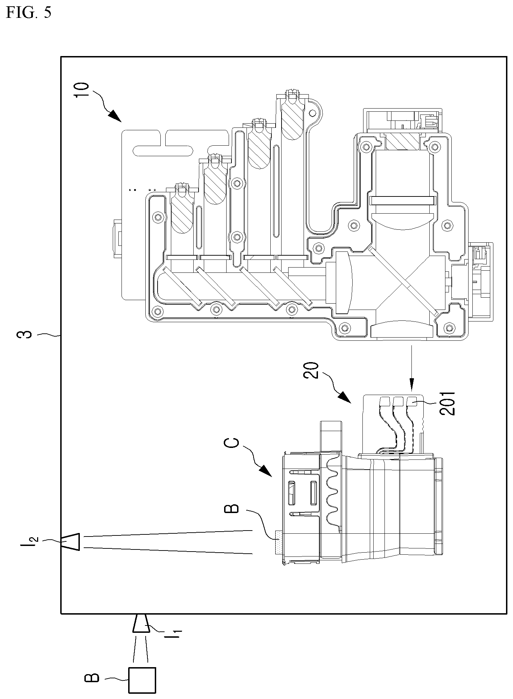

Specifically, the plurality of emission wavelength ranges may be wavelength ranges of light emitted due to excitation when the fluorescent material of the receiving space 201 is irradiated with light of the first to fourth wavelength ranges. Referring to FIG. 5, a first emission wavelength range may be 720 nm to 740 nm which is a part of a wavelength range emitted when a first fluorescent material (for example, CY5.5) is irradiated with light of the first wavelength range, a second emission wavelength range may be 655 nm to 670 nm which is a part of a wavelength range emitted when a second fluorescent material (for example, CY5) is irradiated with light of the second wavelength range, a third emission wavelength range may be 570 nm to 590 nm which is a part of a wavelength range emitted when a third fluorescent material (for example, HEX) is irradiated with light of the third wavelength range, and a fourth emission wavelength range may be 500 nm to 520 nm which is a part of a wavelength range emitted when a fourth fluorescent material (for example, FAM) is irradiated with light of the fourth wavelength range, but they are not particularly limited thereto. That is, the numerical ranges of the emission wavelength ranges vary depending on the type of fluorescent material provided in the receiving space 201.

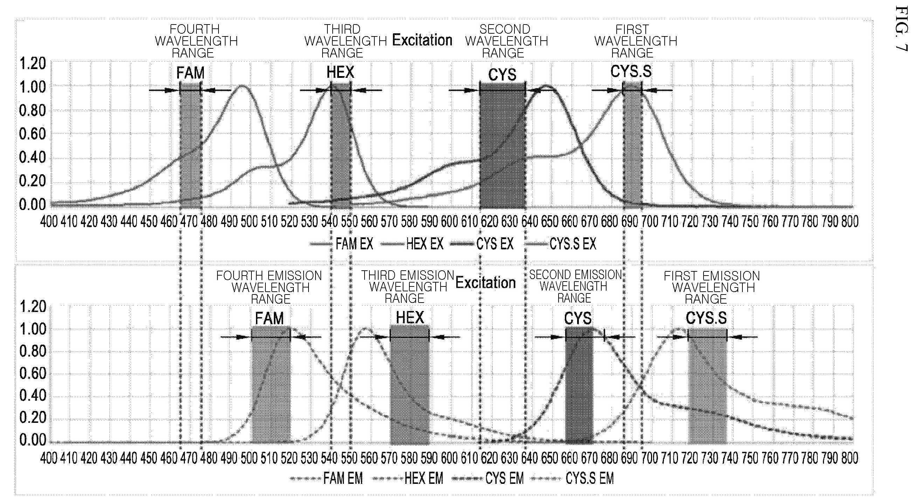

The wavelength ranges for excitation of the first to fourth fluorescent materials and the emission wavelength ranges after the excitation overlap as illustrated in FIG. 7, and through the configuration of the optical components of the present invention, irradiation in the first to fourth wavelength ranges not overlapping each other is performed, and as light of the first to fourth emission wavelength ranges not overlapping each other reaches the sensor 500, since interference due to overlapping wavelength ranges does not occur, the accuracy of analysis is enhanced.

Meanwhile, the optical module according to the embodiment of the present invention includes the lens part 300, and the lens part 300 includes a first lens 310 disposed between the first to fourth mirrors and the common mirror, a second lens 320 disposed between the common mirror and the receiving space, and a third lens 330 disposed between the common mirror and the common filter.

The first to third lenses may be provided in the form of convex lenses, and may serve to increase excitation efficiency and analysis efficiency by condensing incident light.

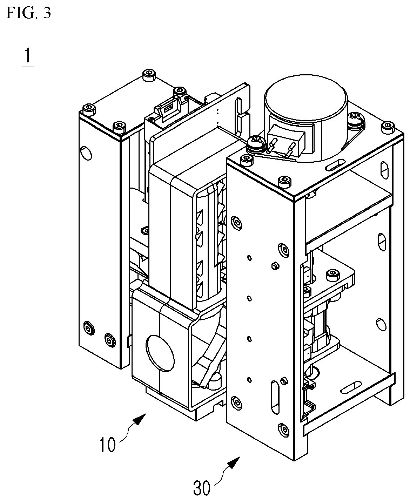

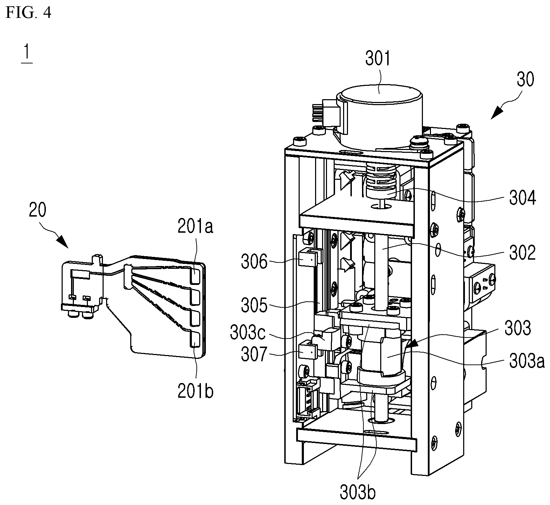

Referring to FIGS. 3 and 4, the optical system 1 according to the embodiment of the present invention may include an elevating module 30 that elevates the optical module 10.

The elevating module 30 may include a motor 301, a rotating shaft 302, an elevating part 303, an elevating rail 305, and elevating sensors 306 and 307.

The motor 301 provides a rotational force to the rotating shaft 302 to be described below.

The rotating shaft 302 receives power from the motor 301 and rotates. One end of the rotating shaft 302 may be coupled to the motor 301. The rotating shaft 302 may be coupled to the motor 301 through a connection member 304. The rotating shaft 302 may be formed with a screw thread and coupled to a nut 303a to be described below. As another embodiment, the rotating shaft 302 may further include a bearing (not illustrated) which prevents left and right shaking during rotation.

The elevating part 303 is a member which elevates when the rotating shaft 302 rotates. The elevating part 303 may be connected to the rotating shaft 302 and the optical module 10 to elevate the optical module 10. Specifically, the elevating part 303 may include the nut 303a and a nut fixing part 303b. The nut 303a is coupled to the rotating shaft 302 formed with the screw thread to elevate with rotation of the rotating shaft 302. The nut fixing part 303b is connected to the optical module 10 and fixes both sides of the nut 303a. Accordingly, the nut fixing part 303b elevates with the elevation of the nut 303a, and accordingly, the optical module 10 also elevates. The nut fixing part 303b may be formed with a protrusion 303c, and the elevating sensors 306 and 307 to be described below may sense the protrusion 303c to sense the elevation of the elevating part 303. Meanwhile, an elevating method of the elevating part 303 is not limited thereto, and may be modified and implemented in any method of elevating the optical module 10 using the rotational force of the rotating shaft 302.

The elevating rail 305 guides elevating movement of the elevating part 303.

The elevating sensors 306 and 307 are disposed near the elevating rail 305 and sense the elevation of the elevating part 303. Specifically, the elevating sensors 306 and 307 may sense the elevation of the protrusion 303c. The elevating sensors 306 and 307 may include a first elevating sensor 306 located at an upper portion and a second elevating sensor 307 located at a lower portion. Specifically, as the first elevating sensor 306 and the second elevating sensor 307 are disposed at the upper portion and the lower portion, respectively, control may be performed such that light emitted through the hole h does not escape from the uppermost receiving space 201a or the lowermost receiving space 201c of the amplification module 20. That is, when the first elevating sensor 306 senses the elevating part 303, the motor 301 may be operated in an opposite direction to lower the elevating part 303 so that light emitted through the hole h does not escape from the uppermost receiving space 201a of the amplification module 20. Conversely, when the second elevating sensor 307 senses the elevating part 303, the second elevating sensor 307 may elevate the elevating part 303 again so that light emitted through the hole h does not escape from the lowermost receiving space 201b of the amplification module 20. Accordingly, a plurality of receiving spaces 201 disposed in a height direction may be sequentially irradiated with light.

The optical system 1 according to the embodiment of the present invention may be provided in an analysis system 2.

The amplification module 20 which is an irradiation target of light emitted from the optical module 10 is inserted into a cartridge C. The configuration of Korean Registered Patent No. 2346703 by the present applicant may be applied to the cartridge C, and the entire disclosure of which is incorporated herein by reference.

As illustrated in FIG. 5, a barcode B is printed on one surface of the cartridge C. The barcode B includes information related to a target from which an analysis target material introduced into the corresponding cartridge C has been acquired (for example, a unique ID for identifying the target, and the like).

Meanwhile, the cartridge C may be introduced into a casing 3, and the analysis system 2 includes at least one recognition module capable of recognizing the barcode B. The at least one recognition module includes a first recognition module I₁ and a second recognition module I2, wherein the first recognition module I₁ is provided outside the casing 3 and performs recognition of the barcode B before the cartridge C is introduced into the casing 3, and the second recognition module I₂ is provided inside the casing 3 and performs recognition of the barcode B after the cartridge C is introduced into the casing 3. As recognition of the barcode B printed on the cartridge C introduced into the casing 3 is enabled by the second recognition module I₂, real-time monitoring is possible in the computing device 4 communicatively connected to the optical system 1 and the analysis system 2.

The present invention has been described above in the present specification with reference to embodiments illustrated in the drawings so that those skilled in the art may easily understand and reproduce the present invention, but this is merely illustrative, and those skilled in the art will understand that various modifications and other equivalent embodiments are possible from the embodiments of the present invention. Accordingly, the protection scope of the present invention should be defined by the claims.

### [Reference numerals]

B: barcode
C: cartridge
H: housing
I₁: first recognition module
I₂: second recognition module
b: bottom surface
f: front surface
h: hole
r: rear surface
1: optical system
2: analysis system
3: casing
4: computing device
100: light source part
110: first light source
120: second light source
130: third light source
140: fourth light source
200: mirror part
210: first mirror
220: second mirror
230: third mirror
240: fourth mirror
250: common mirror
300: lens part
310: first lens
320: second lens
330: third lens
400: filter part
410: first filter
420: second filter
430: third filter
440: fourth filter
450: common filter
500: sensor
20: amplification module
201: receiving space
201a: uppermost receiving space
201b: lowermost receiving space
30: elevating module
301: motor
302: rotating shaft
303: elevating part
303a: nut
303b: nut fixing part
303c: protrusion
304: connection member
305: elevating rail
306: first elevating sensor
307: second elevating sensor

## Claims

1. An optical module comprising:
a first light source;
a second light source emitting light of a different wavelength range from the first light source;
a first mirror spaced apart from the first light source by a first distance and configured to change a first optical path of light emitted from the first light source;
a second mirror spaced apart from the second light source by a second distance different from the first distance and configured to change a second optical path of light emitted from the second light source; and
a common mirror disposed on the optical paths changed by the first mirror and the second mirror, and configured to change the changed optical paths so that the changed optical paths are directed toward a common focusing point,
wherein a distance between the first mirror and the common mirror and a distance between the second mirror and the common mirror are different from each other.

2. The optical module of claim 1, further comprising:
a first filter disposed between the first light source and the first mirror and filtering wavelengths in a range other than a first wavelength range; and
a second filter disposed between the second light source and the second mirror and filtering wavelengths in a range other than a second wavelength range different from the first wavelength range.

3. The optical module of claim 2, wherein the first wavelength range and the second wavelength range do not overlap.

4. The optical module of claim 3, further comprising:
a sensor receiving light emitted from the common focusing point as light is radiated to the common focusing point by the common mirror; and
a common filter disposed between the common mirror and the sensor and filtering wavelengths in a range other than a plurality of preset emission wavelength ranges.

5. The optical module of claim 4, wherein the plurality of emission wavelength ranges are ranges not overlapping each other.

6. The optical module of claim 5, wherein the plurality of emission wavelength ranges are ranges not overlapping each other and not overlapping the first wavelength range and the second wavelength range.

7. The optical module of claim 1, further comprising:
a third light source emitting light of a different wavelength range from the first light source and the second light source;
a fourth light source emitting light of a different wavelength range from the first to third light sources;
a third mirror spaced apart from the third light source by a third distance different from the first and second distances and configured to change a third optical path of light emitted from the third light source; and
a fourth mirror spaced apart from the fourth light source by a fourth distance different from the first to third distances and configured to change a fourth optical path of light emitted from the fourth light source.

8. The optical module of claim 7, further comprising:
a third filter disposed between the third light source and the third mirror and filtering wavelengths in a range other than a third wavelength range different from the first and second wavelength ranges; and
a fourth filter disposed between the fourth light source and the fourth mirror and filtering wavelengths in a range other than a fourth wavelength range different from the first to third wavelength ranges.

9. The optical module of claim 1, wherein the first light source and the second light source emit light at installation positions.

10. The optical module of claim 7, wherein there is no driving motor for moving the first light source and the second light source.

11. An optical system comprising:
the optical module according to any one of claims 1 to 10; and
an amplification module in which a receiving space is located at the common focusing point,
wherein a genetic material extracted from a sample and a fluorescent material excited by wavelength ranges emitted from the first light source and the second light source to emit light of a specific wavelength range are configured to be received in the receiving space.

12. The optical system of claim 11, further comprising an elevating module elevating the optical module,
wherein the elevating module includes:
a motor;
a rotating shaft having one end coupled to the motor; and
an elevating part connecting the rotating shaft and the optical module such that the elevating part elevates to elevate the optical module when the rotating shaft rotates.

13. The optical system of claim 12, wherein the elevating module further includes:
an elevating rail guiding the elevation of the elevating part; and
an elevating sensor sensing the elevation of the elevating part.

14. An analysis system including the optical system according to claim 13, further comprising:
a cartridge to which the amplification module is coupled; and
a casing provided with an internal space into which the cartridge is insertable,
wherein a barcode including information on a collection target of the sample is located on an outer surface of the cartridge, and
a recognition module for recognizing the barcode is located on each of the outside and the inside of the casing.
